# EUROPÄISCHE PATENTANMELDUNG

(11) **EP 0 606 623 A1**
(43) Veröffentlichungstag der Anmeldung: **20.07.1994**
(21) Anmeldenummer: 93120564.5
(22) Anmeldetag: 21.12.1993
(51) Int. Cl.: C03B 33/085, C03B 33/14, A61J 1/06, B23K 26/00, H01J 9/40

(54) **Verfahren zum Herstellen einer Sollbruchstelle an einem Glaskörper, insbesondere an einer Brechampulle**

(30) Priorität: 14.01.1993 DE 4300730
(71) Anmelder: URANIT GmbH, D-52428 Jülich (DE)
(72) Erfinder: Selter, Klaus, D-52441 Linnich (DE)
(74) Vertreter: Gottlob, Peter

(57) **Zusammenfassung**

Die Erfindung betrifft ein Verfahren zum Herstellen einer Sollbruchstelle an einem Glaskörper, insbesondere an einer Brechampulle, bei dem die Oberfläche des Glaskörpers mit einem Laserimpuls bestrahlt wird.

Der Erfindung liegt die Aufgabe zugrunde, bekannte Verfahren dieser Art zu vereinfachen, aber trotzdem sicherzustellen, daß sich die lasermarkierten Glasampullen mit der geforderten Sicherheit und geringem Kraftaufwand brechen lassen.

Die Aufgabe wird gelöst, durch die Verwendung eines gepulsten Hochleistungs-Lasers im Energiebereich von 1 Joule bei einer Impulsdauer in der Größenordnung von 100 nsec bis 200 nsec, sowie durch die Verwendung wenigstens einer steifen Faser oder Borste, deren Stirnseite nach dem Bestrahlen mit dem Laserimpuls über die bestrahlte Oberfläche des Glaskörpers geführt wird.

## Beschreibung

Die Erfindung betrifft ein Verfahren zum Herstellen einer Sollbruchstelle an einem Glaskörper, insbesondere an einer Brechampulle, bei dem die Oberfläche des Glaskörpers mit einem Laserimpuls bestrahlt wird.

Die konventionelle Methode zum Herstellen einer Sollbruchstelle an Brechampullen besteht darin, die Oberfläche auf Höhe der Einschnürung am Ampullenhals mit einem scharfkantigen Werkzeug, z. B. mit einem Diamant-Sägeblatt, anzuritzen und die so verletzte Oberfläche zu markieren. Durch Erzeugen von Zugkräften auf der markierten Seite kann die Ampulle gebrochen und ihr Inhalt entnommen werden. Wesentlich ist hierbei, daß auch nach dem Ritzen die Ampulle absolut dicht bleibt und das Brechen auch nicht unbeabsichtigt, z. B. durch Erschütterungen beim Transport, eintritt. Hierzu bedarf es einer sehr genauen Justierung der Ampulle in Bezug auf das Diamant-Werkzeug, die wegen der groben Toleranzen der Ampullen nicht leicht einzustellen ist.

Aus der DE 36 15 287 C2 ist es bekannt, eine Glasampulle am Ampullenhals so zu erhitzen, daß sich eine ringförmige Zugspannungszone ausbildet. Nach dem Abkühlen wird eine Stelle dieser Zugspannungszone punktuell erhitzt, wodurch eine zusätzliche, eng begrenzte Druck-Vorspannungszone erzeugt wird. Durch Anritzen an der diametral gegenüberliegenden Stelle bildet sich ein linienförmiger Mikroriß aus mit der Folge, daß die Ampullenspitze von selbst abspringt. Die mehrfache thermische Behandlung der Glasampulle erfordert jedoch einen höheren zeitlichen Aufwand im Vergleich zu der konventionellen, mechanischen Methode.

Aus der DE-35 37 434 A1 ist es bekannt, mit Hilfe eines fokussierten Laserstrahls bei einer Brechampulle im Bereich der Einengung am Ampullenhals eine Sollbruchstellen-Einkerbung durch Abdampfen von Glasmaterial zu erzeugen. Im Hinblick auf optimale Abdampftiefe wird bevorzugt ein CO₂-Laser mit einer Leistung von 20 bis 150 Watt bei einer Impulsdauer von etwa 60 bis 140 µsec eingesetzt. Bei dieser Methode müssen mehrere Einkerbungen am Ampullenumfang angebracht sowie eine Einrichtung zur Versorgung der Kerbstellen mit einem Spülgas vorgesehen werden. Dies erfordert einen relativ hohen apparativen Aufwand; außerdem wird der Durchsatz an Ampullen durch das Anbringen mehrerer, über den Umfang verteilter Einkerbungen reduziert im Vergleich zu der eingangs genannten mechanischen Methode.

Der Erfindung liegt die Aufgabe zugrunde, das vorgenannte Verfahren zu vereinfachen, aber trotzdem sicherzustellen, daß sich die lasermarkierten Glasampullen mit der geforderten Sicherheit und geringem Kraftaufwand brechen lassen.

Zur Lösung dieser Aufgabe werden die im Kennzeichen von Patentanspruch 1 genannten Maßnahmen vorgeschlagen. Die hierauf bezogenen Unteransprüche beinhalten vorteilhafte Weiterbildungen und Ausgestaltungen dieser Lösung.

Durch die Verwendung eines gepulsten Hochleistungs-Lasers in Kombination mit faser- oder borstenartigen Wischelementen, die an der bestrahlten Oberfläche vorbeigeführt werden, wird auf überraschend einfache Weise eine Sollbruchstelle erzeugt, die hinsichtlich ihrer Eigenschaften den mechanisch erzeugten Sollbruchstellen entspricht, ohne daß man die z. B. beim Diamant-Ritzen auftretenden Justierprobleme hat; der Laser-Fokus hat eine solche Tiefenschärfe, daß Toleranzen in den Abmessungen der Brechampullen keine Rolle spielen. Da man nur einen Laserimpuls pro Ampulle benötigt, ist es möglich, die Ampullen auf einer Transportvorrichtung kontinuierlich an der Bestrahlungsanlage und den Fasern oder Borsten einer Bürste vorbeizuführen, wobei der Laserpuls von einer Lichtschranke ausgelöst wird, die durch die Ampullen gesteuert wird. Dies gestattet die Einstellung flexibler Bandgeschwindigkeiten der Transportvorrichtung.

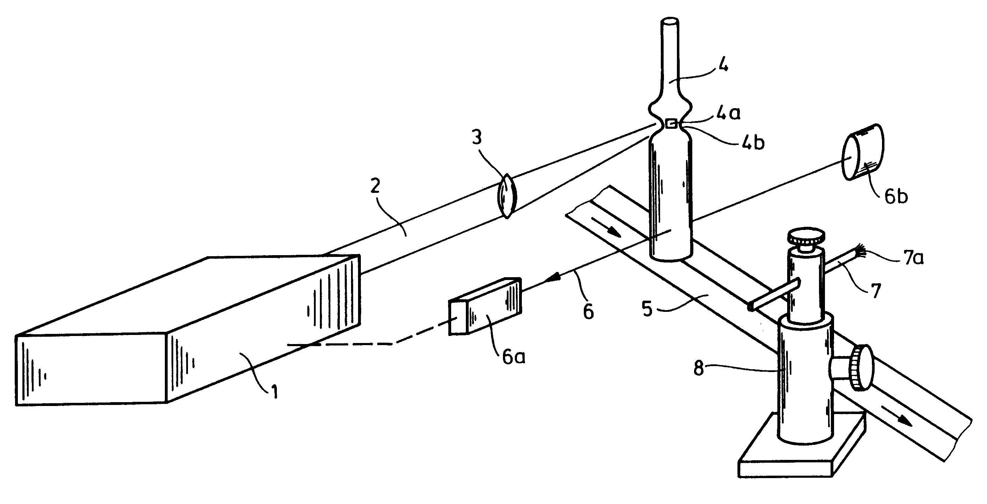

Ein Ausführungsbeispiel der Erfindung wird im folgenden anhand der Zeichnung erläutert:
Ein TEA-CO₂-Hochleistungslaser 1 emittiert Laserpulse 2 im Energiebereich von 1 Joule bei einer Impulsdauer von 100 bis 200 nsec, also einer Leistung in der Größenordnung von mehreren Megawatt. Der Laserpuls 2 wird über einen Hohlspiegel oder eine Linse 3 umgelenkt und fokussiert. Dabei ist die Anordnung so getroffen, daß der Fokus des Laserpulses 2 auf die Glasoberfläche 4a im Bereich der Einschnürung 4b am Hals der Brechampulle 4 auftrifft. Die Brechampullen, die z. B. von einer Füll- und Schließstation kommen, werden auf dem Transportband 5 einer Fördervorrichtung bewegt, wobei jede Ampulle 4 bei Erreichen der Fokussierungsstelle 4a des Laserpulses 2 über eine Lichtschranke 6 einer Lichtsteuerung 6a, 6b den Laserpuls 2 des Lasers 1 auslöst. Anschließend wird die bestrahlte Brechampulle 4 an einer mit metallischen Fasern oder Borsten 7a bestückten Bürste 7 entlang geführt, die dabei mit ihren Stirnseiten über die bestrahlte Oberfläche 4a an der Einschnürung 4b der Ampulle 4 streifen. Die Fasern oder Borsten sind sehr fein und haben einen Durchmesser von ca. 0,1 mm bei einer Länge von 5 mm bis 10 mm. Die Bürste 7 ist in einer feststehenden in sich verstellbaren Halterung 8 am Rande des Transportbandes 5 eingespannt in der Weise, daß die Borsten 7a die bestrahlte Oberfläche 4a abbürsten, wenn die Ampulle 4 auf dem Band 5 an der Halterung 8 vorbeigeführt wird. Die so behandelte Oberfläche 4a wird sodann in bekannter Weise mit einem Farbtupfer oder dergleichen markiert (nicht dargestellt), um dem Benutzer die einzuhaltende Brechrichtung anzuzeigen. Obwohl hierbei praktisch kein meßbarer Materialabtrag an der bestrahlten und durch die Wischelemente 7a behandelten Oberfläche 4a auftritt, lassen sich die Ampullen 4 mühelos und mit glatten Rändern splitterfrei brechen.

Das Verfahren kann in gleicher Weise nicht nur bei Brechampullen, sondern auch bei anderen Glaskörpern mit Erfolg anstelle der mechanischen Methode angewandt werden.

## Patentansprüche

1. Verfahren zum Herstellen einer Sollbruchstelle an einem Glaskörper, insbesondere an einer Brechampulle, bei dem die Oberfläche des Glaskörpers mit einem Laserpuls bestrahlt wird,
gekennzeichnet durch
a) die Verwendung eines gepulsten Hochleistungs-Lasers (1) im Energiebereich von 1 Joule bei einer Impulsdauer in der Größenordnung von 100 nsec bis 200 nsec, sowie
b) die Verwendung wenigstens einer steifen Faser oder Borste (7a), deren Stirnseite nach dem Bestrahlen mit dem Laserpuls (2) über die bestrahlte Oberfläche (4a) des Glaskörpers (4) geführt wird.

2. Verfahren nach Anspruch 1, dadurch gekennzeichnet, daß als Fasern oder Borsten (7a) feine Metalldrähte mit einem Durchmesser von ca. 0,1 mm bei einer Länge von 5 mm bis 10 mm verwendet werden.

3. Verfahren nach Anspruch 1, dadurch gekennzeichnet, daß als gepulster Hochleistungs-Laser (1) ein TEA-CO₂-Laser verwendet wird.
